# EUROPEAN PATENT SPECIFICATION

(11) **EP 3 330 754 B1**
(45) Date of publication and mention of the grant of the patent: **09.09.2020**
(21) Application number: 16830480.6
(22) Date of filing: 25.07.2016
(51) Int. Cl.: G02B 6/00, C03C 3/062, C03C 3/078, C03C 3/085, G02B 1/00, G02B 27/02, C03C 3/087, F21V 8/00

(54) **LIGHT GUIDING PANEL AND LAMINATED LIGHT GUIDING PANEL USING SAME**
LICHTLEITERPLATTE UND LAMINIERTE LICHTLEITERPLATTE DAMIT
PANNEAU DE GUIDAGE DE LUMIÈRE, ET PANNEAU DE GUIDAGE DE LUMIÈRE STRATIFIÉ UTILISANT CE PANNEAU DE GUIDAGE DE LUMIÈRE

(30) Priority: 30.07.2015 JP 2015150304
(43) Date of publication of application: 06.06.2018
(73) Proprietor: Nippon Electric Glass Co., Ltd., Otsu-shi, Shiga 520-8639 (JP)
(72) Inventor: YANASE Tomoki, Otsu-shi Shiga 520-8639 (JP); MURATA Takashi, Otsu-shi Shiga 520-8639 (JP)
(74) Representative: Tetzner, Michael
(86) International application number: PCT/JP2016/071715
(87) International publication number: WO 2017/018375

(56) References cited:
- WO-A1-2005/093493
- WO-A1-2013/140792
- JP-A- 2003 337 298
- JP-A- 2006 301 611
- JP-A- 2010 243 787
- JP-A- 2011 039 490
- JP-A- 2013 063 892
- JP-A- 2013 237 604
- JP-A- 2014 189 457
- JP-A- 2015 049 278
- JP-A- 2015 072 896
- US-A1- 2009 051 836
- US-A1- 2009 244 499
- US-A1- 2011 190 749
- US-A1- 2012 114 904
- US-A1- 2012 268 687
- US-A1- 2013 011 607
- US-A1- 2013 230 692
- US-A1- 2014 293 434

## Description

### Technical Field

The present invention relates to a laminated light-guiding plate using light-guiding plates, and more particularly, to a laminated light-guiding plate using light-guiding plates, which are suitable for a head-mounted display, a 3D projection device, and the like.

### Background Art

In recent years, as head-mounted displays, there have been developed, for example, a device configured to project an image onto a display hanging down from a brim of a hat, an eyeglass-type device configured to display a view of the outside of the device and an image on a display, and a device configured to display an image on a see-through light-guiding plate.

The device configured to display an image on the see-through light-guiding plate allows a user to see the image displayed on the light-guiding plate while seeing a view of the outside of the device through eyeglasses. The device can also implement 3D display through use of a technology of projecting different images onto left and right eyeglasses, and can also implement a virtual reality space through use of a technology of forming an image onto a retina by using a crystalline lens of an eye.

US 2009/244499 A1 discloses an optical light guide in the form of a plate, wherein a plurality of light guide layers are laminated with a plurality of cladding layers, wherein the light guide layers may be formed of crown glass having a refractive index of 1.55 and a thickness of 500 µm.

### Summary of Invention

### Technical Problem

An acrylic resin is mainly used as a material of a light-guiding plate. However, the acrylic resin has a low refractive index nd (about 1.49), and hence it is difficult to increase a degree of freedom of optical design. With the acrylic resin, it is consequently difficult to increase resolution of a display image.

Further, a head-mounted display is required to be mounted to a head, and hence it is demanded that the head-mounted display be reduced in weight.

The present invention has been made in view of the above-mentioned circumstances, and a technical object of the present invention is to devise a light-guiding plate, which allows increase in resolution of a display image and reduction in weight of a device.

### Solution to Problem

As a result of extensive investigation, the inventors of the present invention have found that the above-mentioned technical object can be achieved by thinning a glass sheet having a high refractive index and using the resultant glass sheet for a light-guiding plate. Thus, the inventors propose this finding as the present invention. The present invention provides a laminated light-guiding plate according to claim 1. That is, a laminated light-guiding plate according to one embodiment of the present invention comprises a plurality of glass sheets having a refractive index nd of 1.56 or more, and having a thickness of 1.0 mm or less, an entrance member which is arranged at a position of 30 mm or less from an end surface of each of the glass sheets and is configured to allow an image signal to enter the glass sheets; and a reflecting mirror portion or reflecting mirror portions formed in an inside of the entrance member. With this, a position at which light comes into focus can be changed, and hence it is possible to implement 3D display. Herein, the term "refractive index nd" refers to a value measured through use of a refractometer (e.g., refractometer KPR-2000 manufactured by Shimadzu Corporation).

The laminated light-guiding plate according to the embodiment of the present invention comprises the glass sheet. The glass sheet has a high internal transmittance. In addition, the glass sheet is less liable to have a flaw and stiffer than an acrylic resin.

Further, in the laminated light-guiding plate according to the embodiment of the present invention, the glass sheet has a refractive index nd of 1.56 or more. When the refractive index nd of the glass sheet is limited to 1.56 or more, it is possible to increase a degree of freedom of optical design of the light-guiding plate.

Further, in the laminated light-guiding plate according to the embodiment of the present invention, the glass sheet has a thickness of 1.0 mm or less. When the thickness of the glass sheet is limited to 1.0 mm or less, the weight of the light-guiding plate is reduced, which allows the light-guiding plate to be suitably used for a head-mounted display to be mounted to a head.

Secondly, in the laminated light-guiding plate according to the embodiment of the present invention, it is preferred that an end surface of the glass sheet have an arithmetic surface roughness Ra of 1 µm or less. With this, it is possible to allow an image signal to efficiently enter the glass sheet through the end surface thereof. Herein, the term "arithmetic surface roughness Ra" refers to a value measured through use of a surfcorder ET-4000AK manufactured by Kosaka Laboratory Ltd. in accordance with JIS B-0601 (1994).

Thirdly, in the laminated light-guiding plate according to the embodiment of the present invention, it is preferred that an intersection angle formed by each of both surfaces of the glass sheet and an end surface of the glass sheet fall within a range of 90°±3°. With this, it is possible to allow an image signal to efficiently enter the glass sheet through the end surface thereof.

Fourthly, in the laminated light-guiding plate according to the embodiment of the present invention, it is preferred that the glass sheet have an internal transmittance of 80% or more at an optical path length of 10 mm and a wavelength of 550 nm. With this, an optical loss between entrance into the glass sheet and emission therefrom is reduced. Herein, the "internal transmittance at an optical path length of 10 mm and a wavelength of 550 nm" is measured by converting, in terms of a sheet thickness, measurement data obtained through use of an integrating sphere of a spectrophotometer UH4150 manufactured by Hitachi High-Tech Science Corporation, to thereby calculate the transmittance at an optical path length of 10 mm.

Fifthly, in the laminated light-guiding plate according to the embodiment of the present invention, it is preferred that the glass sheet comprise as a glass composition, in terms of mass%, 10% to 60% of SiO₂, 0% to 8% of Al₂O₃, 10% to 40% of BaO, and 3% to 30% of TiO₂+La₂O₃, and have a liquidus viscosity of 10^{4.0} dPa·s or more. With this, it becomes easy to manufacture glass high in devitrification resistance and refractive index. Herein, the term "TiO₂+La₂O₃" refers to the total amount of TiO₂ and La₂O₃. The term "liquidus viscosity" refers to a value obtained by measuring the viscosity of glass at its liquidus temperature by a platinum sphere pull up method. The term "liquidus temperature" refers to a value obtained by measuring a temperature at which crystals of glass deposit after glass powder that has passed through a standard 30-mesh sieve (500 µm) and remained on a 50-mesh sieve (300 µm) is placed in a platinum boat and kept in a gradient heating furnace for 24 hours.

Sixthly, in the laminated light-guiding plate according to the embodiment of the present invention, it is preferred that the glass sheet have a content of Fe₂O₃ of 0.05 mass% or less. With this, it is possible to increase the internal transmittance of the glass sheet.

Seventhly, in the laminated light-guiding plate according to the embodiment of the present invention, it is preferred that the glass sheet have a content of Cr₂O₃ of 0.0005 mass% or less. With this, it is possible to increase the internal transmittance of the glass sheet.

Eighthly, in the laminated light-guiding plate according to the embodiment of the present invention, it is preferred that the glass sheet have a waviness of 0.1 µm or less. With this, it is possible to increase resolution of a display image. Herein, the "waviness" is measured in accordance with a FPD glass substrate surface waviness measurement method described in SEMI D15-1296.

Ninthly, in the laminated light-guiding plate according to the embodiment of the present invention, it is preferred that at least one surface of the glass sheet have an arithmetic surface roughness Ra of less than 0.5 nm. With this, when the light-guiding plates are used to form a laminated light-guiding plate, it becomes easy to increase lamination accuracy, and it also becomes easy to suppress optical deviation.

Tenthly, in the laminated light-guiding plate according to the embodiment of the present invention, it is preferred that at least one surface of the glass sheet have a pencil hardness of 3H or more. With this, the surface of the glass sheet is less liable to have a flaw, and hence it is possible to maintain resolution of a display image for a long period of time. Herein, the term "pencil hardness" refers to a value measured in accordance with JIS K1600.

Eleventhly, in the laminated light-guiding plate according to the embodiment of the present invention, it is preferred that the glass sheet have a curved surface, and the curved surface has a radius of curvature of 200 mm or more. Herein, the term "radius of curvature" refers to a value measured on an outermost surface of the glass sheet.

The laminated light-guiding plate according to the embodiment of the present invention comprises the entrance member, which is arranged at a position of 30 mm or less from an end surface of the glass sheet, and is configured to allow an image signal to enter the glass sheet. When the thickness of the glass sheet is small, in terms of optical design, it becomes difficult to allow light to enter the glass sheet through the end surface thereof. In this case, when the entrance member is arranged in the vicinity of the end surface of the glass sheet, it is possible to allow light to enter the glass sheet without degrading resolution of a display image.

Twelfthly, it is preferred that the laminated light-guiding plate according to the embodiment of the present invention be used as a member for a head-mounted display.

### Brief Description of Drawings

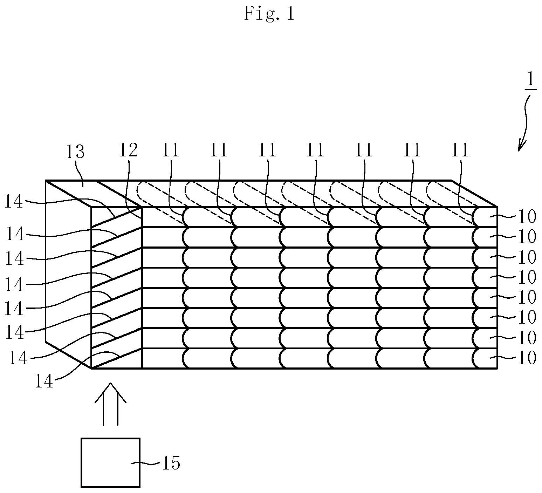

FIG. 1 is a schematic perspective view for illustrating an example of a laminated light-guiding plate of the present invention.

### Description of Embodiments

A light-guiding plate of the present invention comprises a glass sheet having a thickness of 1.0 mm or less, preferably 0.7 mm or less, 0.5 mm or less, 0.4 mm or less, 0.3 mm or less, 0.25 mm or less, 0.2 mm or less, 0.15 mm or less, 0.1 mm or less, particularly desirably 0.05 mm or less. When the thickness of the glass sheet is excessively large, the mass of the light-guiding plate increases, and hence it is difficult to apply the glass sheet to an application such as a head mounted display. Particularly in the case where a plurality of light-guiding plates are laminated, the mass of the laminated light-guiding plate increases. On the other hand, when the thickness of the glass sheet is excessively small, it is difficult to handle the glass sheet during the fabrication of a device. Thus, the thickness of the glass sheet is desirably 0.01 mm or more, particularly desirably 0.03 mm or more.

In the light-guiding plate of the present invention, the glass sheet has a refractive index nd of 1.56 or more, preferably 1.58 or more, 1.60 or more, 1.62 or more, 1.65 or more, 1.68 or more, particularly preferably 1.70 or more. When the refractive index nd of the glass sheet is excessively low, the degree of freedom in optical design is liable to lower. On the other hand, when the refractive index nd of the glass sheet is excessively high, it is difficult to form the glass sheet into a sheet shape, and hence the production efficiency of the light-guiding plate is liable to lower. Thus, the refractive index nd of the glass sheet is preferably 2.00 or less, 1.90 or less, 1.85 or less, particularly preferably 1.80 or less.

In the light-guiding plate of the present invention, an end surface of the glass sheet has an arithmetic surface roughness Ra of preferably 1 µm or less, 0.5 µm or less, 0.1 µm or less, 50 nm or less, 30 nm or less, 10 nm or less, particularly preferably 1 nm or less. In the case where the arithmetic surface roughness Ra of the end surface of the glass sheet is excessively large, light is scattered when an image signal is input through the end surface of the glass sheet. Accordingly, the resolution of a display image is liable to lower.

An intersection angle formed between each of both surfaces of the glass sheet and the end surface thereof falls within the range of preferably 90°±3°, 90°±2°, particularly preferably 90°±1°. When the intersection angle formed between each of both surfaces of the glass sheet and the end surface thereof falls outside the above-mentioned range, an image signal can be easily propagated from the end surface of the glass sheet to the inside thereof.

The end surface of the glass sheet is preferably a cut surface formed with laser light. With this, the surface of the end surface is smooth without being roughened at the time of cutting, and hence light is hardly scattered when an image signal is input through the end surface of the glass sheet.

In the light-guiding plate of the present invention, the glass sheet preferably comprises as a glass composition, in terms of mass%, 10% to 60% of SiO₂, 0% to 8% of Al₂O₃, 10% to 40% of BaO, and 3% to 30% of TiO₂+La₂O₃. The reasons why the glass composition range is specified as described above are described below. In the description of the content range of each component, "%" means "mass%".

The content of SiO₂ is preferably from 10% to 60%. When the content of SiO₂ decreases, it is difficult to form a glass network structure, resulting in difficulty in vitrification. Further, viscosity at high temperature excessively lowers and hence it is difficult to ensure a high liquidus viscosity. Thus, the content of SiO₂ is preferably 15% or more, 20% or more, 25% or more, 30% or more, 35% or more, 38% or more, particularly preferably 40% or more. On the other hand, when the content of SiO₂ increases, meltability and formability are liable to lower, and the refractive index is liable to lower. Thus, the content of SiO₂ is preferably 55% or less, 51% or less, 48% or less, particularly preferably 45% or less.

The content of Al₂O₃ is preferably from 0% to 8%. When the content of Al₂O₃ increases, devitrified crystals are liable to deposit at the time of forming, the liquidus viscosity is liable to lower, and the refractive index is liable to lower. Thus, the content of Al₂O₃ is preferably 8% or less, 7% or less, particularly preferably 6% or less. On the other hand, when the content of Al₂O₃ decreases, the balance of the glass composition is disturbed, and the glass is liable to devitrify contrarily. Thus, the content of Al₂O₃ is preferably 0.1% or more, 0.5% or more, 1% or more, 3% or more, particularly preferably 5% or more.

BaO is a component that increases the refractive index without extremely lowering the viscosity at high temperature among alkaline-earth metal oxides. The content of BaO is preferably from 10% to 40%. When the content of BaO increases, the liquidus viscosity is liable to lower, and the refractive index, density, and thermal expansion coefficient are liable to increase. Thus, the content of BaO is preferably 35% or less, 32% orless, 30% or less, particularly preferably 28% or less. On the other hand, when the content of BaO decreases, it is difficult to obtain a desired refractive index, and it is difficult to ensure a high liquidus viscosity. Thus, the content of BaO is preferably 12% or more, 15% or more, 17% or more, 20% or more, 23% or more, particularly preferably 25% or more.

TiO₂ and La₂O₃ are each a component that effectively increases the refractive index. Thus, the total amount of TiO₂ and La₂O₃ is preferably 3% or more, 5% or more, 8% or more, 11% or more, 15% or more, particularly preferably 17% or more. However, when the total amount of TiO₂ and La₂O₃ increases, devitrification resistance is liable to lower. Thus, the total amount of TiO₂ and La₂O₃ is preferably 30% or less, 25% or less, particularly preferably 22% or less.

TiO₂ is a component that increases the refractive index to the highest extent among general oxides excluding heavy metal oxides, such as rare-earth oxides. However, when the content of TiO₂ increases, glass is colored and the devitrification resistance is liable to lower. Thus, the content of TiO₂ is preferably from 0.1% to 15%, from 1% to 12%, from 2% to 11%, from 3% to 10%, from 4% to 9%, particularly preferably from 5% to 8%.

La₂O₃ is a component that effectively increases the refractive index. However, when the content of La₂O₃ increases, a liquidus temperature is liable to lower. Thus, the content of La₂O₃ is preferably from 0% to 15%, from 1% to 13%, from 5% to 12%, particularly preferably from 7% to 11%.

In addition to the above-mentioned components, for example, the following components may be added as optional components.

The content of B₂O₃ is preferably from 0% to 10%. When the content of B₂O₃ increases, the refractive index and Young's modulus are liable to lower. Thus, the content of B₂O₃ is preferably 8% or less, particularly preferably 6% or less. On the other hand, when the content of B₂O₃ decreases, the liquidus temperature is liable to lower. Thus, the content of B₂O₃ is preferably 1% or more, 3% or more, particularly preferably 5% or more.

The content of MgO is preferably from 0% to 12%. MgO is a component that increases the Young's modulus and is a component that lowers the viscosity at high temperature. However, when MgO is contained in a large amount, the refractive index is liable to lower, and the liquidus temperature rises, with the result that the devitrification resistance lowers, and the density and thermal expansion coefficient increase excessively. Thus, the content of MgO is preferably 10% or less, 5% or less, 3% or less, 2% or less, 1.5% or less, 1% or less, particularly preferably 0.5% or less.

The content of CaO is preferably from 0% to 15%. When the content of CaO increases, the density and thermal expansion coefficient are liable to increase. When the content of CaO is extremely large, the balance of the glass composition is disturbed, and the devitrification resistance is liable to lower. Thus, the content of CaO is preferably 13% or less, 10% or less, particularly preferably 9% or less. On the other hand, when the content of CaO decreases, the meltability is liable to lower, the Young's modulus is liable to lower, and the refractive index is liable to lower. Thus, the content of CaO is preferably 1% or more, 3% or more, 5% or more, particularly preferably 6% or more.

The content of SrO is preferably from 0% to 15%. When the content of SrO increases, the refractive index, density, and thermal expansion coefficient are liable to increase. When the content of SrO is extremely large, the balance of the glass composition is disturbed, and the devitrification resistance is liable to lower. Thus, the content of SrO is preferably 13% or less, 12% or less, particularly preferably 11% or less. On the other hand, when the content of SrO decreases, the meltability is liable to lower, and the refractive index is liable to lower. Thus, the content of SrO is preferably 1% or more, 3% or more, 5% or more, 7% or more, particularly preferably 10% or more.

The content of ZnO is preferably from 0% to 15%. However, when the content of ZnO increases, the density and thermal expansion coefficient increase. When the content of ZnO becomes excessive, the component balance of the glass composition is disturbed, and it is difficult to ensure a high liquidus viscosity. Thus, the content of ZnO is preferably 15% or less, 12% or less, 10% or less, 8% or less, 6% or less, particularly preferably 4% or less. On the other hand, when the content of ZnO decreases, it is difficult to ensure a high liquidus viscosity. Thus, the content of ZnO is preferably 0.1% or more, 0.5% or more, more than 1%, 1.5% or more, 2% or more, 2.5% or more, particularly preferably 3% or more.

ZrO₂ is a component that increases the refractive index. However, when the content of ZrO₂ increases, the liquidus temperature is liable to lower. Thus, the content of ZrO₂ is preferably from 0% to 10%, from 0.1% to 7%, from 0.5% to 6%, particularly preferably from 1% to 5.5%.

Li₂O, Na₂O, and K₂O are each a component that lowers the viscosity at high temperature and are each a component that increases the thermal expansion coefficient. However, when those components are introduced in large amounts, the viscosity at high temperature excessively lowers, and it is difficult to ensure a high liquidus viscosity. Thus, the total amount of Li₂O, Na₂O, and K₂O is preferably 15% or less, 10% or less, 5% or less, 2% or less, 1% or less, 0.5% or less, particularly preferably 0.1% or less. Further, the content of each of Li₂O, Na₂O, and K₂O is preferably 10% or less, 8% or less, 5% or less, 2% or less, 1% or less, 0.5% or less, particularly preferably 0.1% or less.

As a fining agent, one kind or two or more kinds selected from the group consisting of As₂O₃, Sb₂O₃, CeO₂, SnO₂, F, Cl, and SO₃ may be added in an amount within the range of from 0% to 1%. Note that, from the environmental viewpoint, it is preferred that the use of As₂O₃, Sb₂O₃, and F be avoided as much as possible, and it is preferred that the content of each of As₂O₃, Sb₂O₃, and F be less than 0.1%. The content of SnO₂ is preferably from 0% to 1%, from 0.01% to 0.5%, particularly preferably from 0.05% to 0.4%. Further, the total amount of SnO₂, SO₃, and Cl is preferably from 0% to 1%, from 0.001% to 1%, from 0.01% to 0.5%, particularly preferably from 0.05% to 0.3%.

PbO is a component that lowers the viscosity at high temperature. However, from the environmental viewpoint, it is preferred that the use of PbO be avoided as much as possible. The content of PbO is preferably 0.5% or less, particularly preferably less than 0.1%.

Bi₂O₃, Gd₂O₃, Nb₂O₅, Ta₂O₅, and WO₃ are each a component that increases the refractive index, but are expensive and difficult to obtain in large amounts, and hence the use thereof is desirably avoided as much as possible. The content of each of those components is preferably 1% or less, particularly preferably 0.5% or less.

Fe₂O₃ and Cr₂O₃ are components that are mixed as impurities in raw materials. When those components increase, the internal transmittance of the glass sheet is liable to lower. Thus, the content of Fe₂O₃ is preferably 500 ppm (0.05%) or less, 200 ppm or less, 100 ppm or less, 50 ppm or less, particularly preferably 30 ppm or less. The content of Cr₂O₃ is preferably 5 ppm (0.0005%) or less, 3 ppm or less, 2 ppm or less, 1 ppm or less, particularly preferably 0.5 ppm or less. The use of high-purity glass raw materials can reduce the contents of Fe₂O₃ and Cr₂O₃.

In the light-guiding plate of the present invention, the glass sheet has a density of preferably 5.0 g/cm³ or less, 4.8 g/cm³ or less, 4.5 g/cm³ or less, 4.3 g/cm³ or less, 3.7 g/cm³ or less, particularly preferably 3.5 g/cm³ or less. With this, the weight of a device can be reduced. The "density" may be measured by a well-known Archimedes method.

The glass sheet has a thermal expansion coefficient of preferably from 30×10⁻⁷/°C to 100×10⁻⁷/°C, from 40×10⁻⁷/°C to 90×10⁻⁷/°C, from 60×10⁻⁷/°C to 85×10⁻⁷/°C, particularly preferably from 65×10⁻⁷/°C to 80×10⁻⁷/°C. In the case where the thickness of the glass sheet is small, when a functional film, such as a reflective film, is formed on a surface of the glass sheet, the glass sheet is liable to warp. Thus, when the thermal expansion coefficient is controlled within the above-mentioned range, such a situation as described above can be easily prevented. The "thermal expansion coefficient" is a value measured with a dilatometer, and refers to an average value in the temperature range of from 30°C to 380°C.

The glass sheet has a strain point of preferably 500°C or more, 550°C or more, 600°C or more, 620°C or more, particularly preferably 640°C or more. With this, the glass sheet is less liable to undergo heat shrinkage even when high-temperature heat treatment is performed during the manufacturing process of a device. The "strain point" refers to a value measured in accordance with a method of ASTM C336.

The glass sheet has a temperature at a viscosity at high temperature of 10^{2.0} dPa·s of preferably 1,260°C or more, 1,280°C or more, 1, 300°C or more, 1, 330°C or more, particularly preferably 1, 350°C or more. With this, the viscosity of the glass at the time of forming increases, and the glass is less liable to devitrify at the time of forming. The "temperature at a viscosity at high temperature of 10^{2.0} dPa·s" refers to a value obtained by measurement using a platinum sphere pull up method.

The glass sheet has a liquidus temperature of preferably 1,200°C or less, 1, 150°C or less, 1, 130°C or less, 1,110°C or less, 1,050°C or less, 1,030°C or less, particularly preferably 1,000°C or less. Further, the glass sheet has a liquidus viscosity of preferably 10^{3.0} dPa·s or more, 10^{3.5} dPa·s or more, 10^{4.0} dPa·s or more, 10^{4.5} dPa·s or more, 10^{4.8} dPa·s or more, 10^{5.0} dPa·s or more, 10^{5.2} dPa·s or more, particularly preferably 10^{5.3} dPa·s or more. With this, the glass is less liable to devitrify at the time of forming, and the glass sheet can be easily formed by a float method or an overflow down-draw method.

The glass sheet may be formed by an overflow down-draw method, a slot down method, a re-draw method, a float method, or a roll-out method. From the viewpoint of increasing the surface smoothness of both surfaces of the glass sheet, it is preferred that the glass sheet be formed by an overflow down-draw method. When predetermined irregularities are provided in a surface of a forming trough, a non-reflective structure can be formed in a surface of the glass sheet at the time of forming.

The glass sheet has an internal transmittance at an optical path length of 10 mm and a wavelength of 550 nm of preferably 80% or more, 85% or more, 90% or more, particularly preferably 95% or more. When the internal transmittance of the glass sheet is excessively low, an optical loss between entrance into the glass sheet and emission therefrom increases.

At least one surface (desirably each of both surfaces) of the glass sheet has an arithmetic surface roughness Ra of preferably less than 0.5 nm, 0.3 nm or less, particularly preferably 0.2 nm or less. When the arithmetic surface roughness Ra of the surface is excessively large, the resolution of a display image is liable to lower.

The glass sheet has a waviness of preferably 0.1 µm or less, 0.08 µm or less, 0.05 µm or less, particularly preferably 0.03 µm or less. When the waviness of the glass sheet is excessively large, the resolution of a display image is liable to lower.

At least one surface (desirably each of both surfaces) of the glass sheet has a pencil hardness of preferably 3H or more, 5H or more, particularly preferably 7H or more. When the pencil hardness of the surface is excessively low, the glass surface is liable to have a flaw, and hence it is difficult to maintain the resolution of a display image.

When the glass sheet has a curved surface, the curved surface has a radius of curvature of preferably 200 mm or more, particularly preferably 500 mm or more. With this, it is easy to apply the glass sheet to a light-guiding plate to be used for a head-mounted display, particularly a light-guiding plate to be used for a display hanging down from the brim of a hat.

The glass sheet preferably comprises, in the inside thereof, a reflecting mirror, a half mirror, or layers having different refractive indices. With this, the position at which light comes into focus is easily changed, and hence the resolution of a 3D image can be increased. As a method of forming the reflecting mirror, the half mirror, or the like in the inside of the glass sheet, there is given, for example, a method involving irradiating the inside of the glass sheet with laser light to form a heterogeneous layer having a relatively high refractive index.

The light-guiding plate of the present invention comprises an entrance member (e.g., a mirror member), which is arranged at a position of 30 mm or less from the end surface of the glass sheet, and is configured to allow an image signal to enter the glass sheet. When the thickness of the glass sheet is small, it is difficult, in terms of optical design, to allow light to enter through the end surface of the glass sheet. In this case, when the entrance member is arranged on the display surface side of the glass sheet and in the vicinity of the end surface, it is possible to allow light to effectively enter the glass sheet without lowering a display area.

The laminated light-guiding plate of the present invention is a laminated light-guiding plate having a structure in which a plurality of light-guiding plates are laminated, wherein the light-guiding plates are each the above-mentioned light-guiding plate. The number of light-guiding plates laminated is preferably 2 or more, 5 or more, particularly preferably 10 or more. When the number of light-guiding plates laminated is small, the resolution of a display image in its depth direction is liable to lower. As a result, it is difficult to achieve a 3D display. When an adhesive having a refractive index matching to that of the glass sheet is used, the plurality of light-guiding plates can be laminated to be integrated.

The laminated light-guiding plate of the present invention may have bonded thereto a member having irregularities on the outside thereof, as a protective member for the outer surface of the outermost glass sheet. With this, light extraction efficiency is enhanced.

FIG. 1 is a schematic perspective view for illustrating an example of the laminated light-guiding plate of the present invention. A laminated light-guiding plate 1 has a structure in which eight glass sheets 10 are laminated to be integrated through use of an adhesive (not shown) . In addition, half mirror portions 11 formed in the inside of each of the glass sheets 10 by irradiation with laser light. Further, an entrance member 13 is arranged to be brought into contact with an end surface 12 of each of the glass sheets. In addition, reflecting mirror portions 14 are formed in the inside of the entrance member 13 by irradiation with laser light. Moreover, a light source 15 is arranged in the vicinity of the entrance member 13.

In the laminated light-guiding plate 1, light emitted from the light source 15 enters the entrance member 13, and is then reflected by the reflecting mirror portions 14 to be propagated through the end surface 12 of each of the glass sheets 10 to the inside of each of the glass sheets 10. The light that has been propagated to the inside of each of the glass sheets 10 is reflected by the half mirror portions 11 to be emitted to the outside of the light-guiding plate 1. Thus, a high-resolution 3D image can be achieved.

### Examples

Now, glass sheets 10 for the laminated light-guiding plate 1 of the present invention are described in detail based on Examples. Note that, the following Examples are merely illustrative. The present invention is by no means limited to the following Examples .

Sample Nos. 1 to 3 are shown in Table 1.

**Table 1**

| | | No. 1 | No. 2 | No. 3 |
|---|---|---|---|---|
| Glass composition (mass%) | SiO₂ | 41.0 | 34.0 | 31.0 |
| | Al₂O₃ | 5.0 | 3.0 | 2.0 |
| | B₂O₃ | 0.0 | 7.0 | 7.0 |
| | MgO | 0.0 | 0.0 | 1.0 |
| | CaO | 3.0 | 3.0 | 6.0 |
| | SrO | 11.0 | 6.0 | 4.0 |
| | BaO | 25.0 | 27.0 | 28.0 |
| | ZnO | 3.0 | 2.0 | 0.0 |
| | TiO₂ | 5.0 | 6.0 | 10.0 |
| | ZrO₂ | 2.0 | 1.0 | 1.0 |
| | La₂O₃ | 0.0 | 11.0 | 10.0 |
| | Fe₂O₃ | 0.0100 | 0.0010 | 0.0040 |
| | Cr₂O₃ | 0.0001 | 0.0001 | 0.0002 |
| nd | | 1.63 | 1.67 | 1.70 |
| ρ (g/cm³) | | 3.38 | 3.64 | 3.63 |
| α₃₀₋₃₈₀ (×10⁻⁷/°C) | | 71 | 78 | 80 |
| Ps (°C) | | 640 | 640 | 640 |
| Ta (°C) | | 680 | 670 | 675 |
| Ts (°C) | | 825 | 795 | 790 |
| 10^{4.0} dPa·s (°C) | | 1,020 | 960 | 935 |
| 10^{3.0} dPa·s (°C) | | 1,120 | 1,040 | 1,005 |
| 10^{2.5} dPa·s (°C) | | 1,190 | 1,090 | 1,050 |
| TL (°C) | | 930 | 940 | 920 |
| logηTL (dPa·s) | | 5.3 | 4.2 | 4.3 |
| T (%) | | 93 | 90 | 82 |

Each sample in Table 1 was prepared as described below. First, glass raw materials were blended so as to achieve the glass composition shown in Table 1, and the resultant was melted at 1, 600°C for 24 hours by using a platinum pot. Next, the resultant molten glass was poured onto a carbon sheet and formed into a sheet shape. The resultant glass was evaluated for properties in Table 1.

The refractive index nd is a value obtained by producing samples each having a rectangular parallelepiped shape measuring 25 mm by 25 mm by about 3 mm, then subjecting the samples to annealing treatment at a cooling rate of 0.1°C/min in the temperature range of from (annealing point Ta+30°C) to (strain point Ps-50°C), and subsequently performing measurement with a refractometer KPR-2000 manufactured by Shimadzu Corporation under a state in which an immersion liquid having a refractive index matching to that of the samples is applied between glasses.

The density ρ is a value measured by a well-known known Archimedes method.

The thermal expansion coefficient α is a value measured with a dilatometer and is an average value in the temperature range of from 30°C to 380°C.

The strain point Ps and the annealing point Ta are values measured based on a method of ASTM C336.

The softening point Ts is a value measured based on a method of ASTM C338.

The temperatures at viscosities at high temperature of 10^{4.0} dPa·s, 10^{3.0} dPa·s, 10^{2.5} dPa·s, and 10^{2.0} dPa·s are values measured by a platinum sphere pull up method.

The transmittance T is an internal transmittance at an optical path length of 10 mm and a wavelength of 550 nm, and is obtained by calculating a transmittance at an optical path length 10 mm through thickness conversion of measurement data obtained using an integrating sphere of a spectrophotometer UH4150 manufactured by Hitachi High-Tech Science Corporation.

The liquidus temperature TL is a value obtained by measuring a temperature at which crystals of glass deposit when glass powder that has passed through a standard 30-mesh sieve (500 µm) and remained on a 50-mesh sieve (300 µm) is placed in a platinum boat and kept in a gradient heating furnace for 24 hours. Further, the liquidus viscosity logηTL is a value obtained by measuring the viscosity of glass at its liquidus temperature by a platinum sphere pull up method.

Next, materials for Sample No. 1 of Table 1 were melted in a continuous melting furnace, and formed into a sheet shape having a thickness of 0.3 mm by an overflow down-draw method to provide a glass sheet. The resultant glass sheet was cut with a laser into dimensions of 300 mm by 300 mm, and washed. An end surface of the glass sheet after the cutting had an arithmetic surface roughness Ra of 0.5 nm. Further, both surfaces of the glass sheet had an arithmetic surface roughness Ra of 0.2 nm.

Subsequently, an Al film having a dot shape was formed as a reflecting mirror on one surface of the glass sheet by a sputtering method.

Next, light was allowed to enter through the end surface of the glass sheet via a mirror provided in the vicinity of the end surface of the glass sheet. Then, it was confirmed that the direction of the emission of the light from the glass sheet changed when the incident angle of the light was changed by adjusting the angle of the mirror.

### Reference Signs List

- 1: laminated light-guiding plate
- 10: glass sheet
- 11: half mirror portion
- 12: end surface of glass sheet
- 13: entrance member
- 14: reflecting mirror portion
- 15: light source

## Claims

1. A laminated light-guiding plate (1), comprising:
a plurality of glass sheets (10) having a refractive index nd of 1.56 or more, and having a thickness of 1.0 mm or less,
an entrance member (13) which is arranged at a position of 30 mm or less from an end surface (12) of each of the glass sheets (10) and is configured to allow an image signal to enter the glass sheets (10); and
a reflecting mirror portion (14) or reflecting mirror portions (14) formed in an inside of the entrance member (13).

2. The laminated light-guiding plate (1) according to claim 1, wherein an end surface (12) of each glass sheet (10) has an arithmetic surface roughness Ra of 1 µm or less.

3. The laminated light-guiding plate (1) according to claim 1 or 2, wherein an intersection angle formed by each of both surfaces of each glass sheet (10) and an end surface (12) of each glass sheet (10) falls within a range of 90°±3°.

4. The laminated light-guiding plate (1) according to any one of claims 1 to 3, wherein each glass sheet (10) has an internal transmittance of 80% or more at an optical path length of 10 mm and a wavelength of 550 nm.

5. The laminated light-guiding plate (1) according to any one of claims 1 to 4, wherein each glass sheet (10) comprises as a glass composition, in terms of mass%, 10% to 60% of SiO₂, 0% to 8% of Al₂O₃, 10% to 40% of BaO, and 3% to 30% of TiO₂+La₂O₃, and has a liquidus viscosity of 10^{4.0} dPa·s or more.

6. The laminated light-guiding plate (1) according to any one of claims 1 to 5, wherein each glass sheet (10) has a content of Fe₂O₃ of 0.05 mass% or less.

7. The laminated light-guiding plate (1) according to any one of claims 1 to 6, wherein each glass sheet (10) has a content of Cr₂O₃ of 0.0005 mass% or less.

8. The laminated light-guiding plate (1) according to any one of claims 1 to 7, wherein each glass sheet (10) has a waviness of 0.1 µm or less.

9. The laminated light-guiding plate (1) according to any one of claims 1 to 8, wherein at least one surface of each glass sheet (10) has an arithmetic surface roughness Ra of less than 0.5 nm.

10. The laminated light-guiding plate (1) according to any one of claims 1 to 9, wherein at least one surface of each glass sheet (10) has a pencil hardness of 3H or more.

11. The laminated light-guiding plate (1) according to any one of claims 1 to 10, wherein each glass sheet (10) has a curved surface, and the curved surface has a radius of curvature of 200 mm or more.

12. The laminated light-guiding plate (1) according to any one of claims 1 to 11, further comprising half mirror portions (11) in an inside of each of the glass sheets (10).

13. Use of the laminated light-guiding plate (1) according to any one of claims 1 to 12 as a member for a head-mounted display.

## Patentansprüche

1. Laminierte Lichtleiterplatte (1), umfassend:
eine Vielzahl von Glasfolien (10) mit einem Brechungsindex nd von 1,56 oder mehr und mit einer Dicke von 1,0 mm oder weniger,
einem Eingangselement (13), das an einer Position 30 mm oder weniger von einer Endfläche (12) einer jeden Glasfolie (10) angeordnet und dazu beschaffen ist, zu ermöglichen, dass ein Bildsignal in die Glasfolien (10) eintritt, und
einen Reflexionsspiegelabschnitt (14) oder Reflexionsspiegelabschnitte (14), das bzw. die im Inneren des Eingangselements (13) ausgebildet ist bzw. sind.

2. Laminierte Lichtleiterplatte (1) nach Anspruch 1, wobei eine Endfläche (12) einer jeden Glasfolie (10) eine arithmetische Oberflächenrauigkeit Ra von 1 µm oder weniger aufweist.

3. Laminierte Lichtleiterplatte (1) nach Anspruch 1 oder 2, wobei ein Schnittwinkel, der durch jede der beiden Oberflächen einer jeden Glasfolie (10) und einer Endfläche (12) einer jeden Glasfolie (10) gebildet wird, innerhalb eines Bereichs von 90°±3° fällt.

4. Laminierte Lichtleiterplatte (1) nach einem der Ansprüche 1 bis 3, wobei jede Glasfolie (10) einen Reintransmissiongrad von 80 % oder mehr bei einer optischen Weglänge von 10 mm und einer Wellenlänge von 55 nm aufweist.

5. Laminierte Lichtleiterplatte (1) nach einem der Ansprüche 1 bis 4, wobei jede Glasfolie (10) als Glaszusammensetzung, in Massenprozent, 10 % bis 60 % an SiO₂, 0 % bis 8 % an Al₂O₃, 10 % bis 40 % an BaO und 3 % bis 30 % an TiO₂+La₂O₃ umfasst und eine Liquidusviskosität von 10^{4,0} dPa·s oder mehr aufweist.

6. Laminierte Lichtleiterplatte (1) nach einem der Ansprüche 1 bis 5, wobei jede Glasfolie (10) einen Gehalt an Fe₂O₃ von 0,05 Massenprozent oder weniger aufweist.

7. Laminierte Lichtleiterplatte (1) nach einem der Ansprüche 1 bis 6, wobei jede Glasfolie (10) einen Gehalt an Cr₂O₃ von 0,0005 Massenprozent oder weniger aufweist.

8. Laminierte Lichtleiterplatte (1) nach einem der Ansprüche 1 bis 7, wobei jede Glasfolie (10) eine Welligkeit von 0,1 µm oder weniger aufweist.

9. Laminierte Lichtleiterplatte (1) nach einem der Ansprüche 1 bis 8, wobei wenigstens eine Oberfläche einer jeden Glasfolie (10) eine arithmetische Oberflächenrauigkeit Ra von weniger als 0,5 nm aufweist.

10. Laminierte Lichtleiterplatte (1) nach einem der Ansprüche 1 bis 9, wobei wenigstens eine Oberfläche einer jeden Glasfolie (10) eine Bleistifthärte von 3H oder mehr aufweist.

11. Laminierte Lichtleiterplatte (1) nach einem der Ansprüche 1 bis 10, wobei jede Glasfolie (10) eine gekrümmte Oberfläche aufweist und die gekrümmte Oberfläche einen Krümmungsradius von 200 mm oder mehr aufweist.

12. Laminierte Lichtleiterplatte (1) nach einem der Ansprüche 1 bis 11, ferner umfassend Halbspiegelabschnitte (11) im Inneren einer jeden Glasfolie (10).

13. Verwendung der laminierten Lichtleiterplatte (1) nach einem der Ansprüche 1 bis 12 als ein Element für eine am Kopf befestigte Anzeige.

## Revendications

1. Plaque stratifiée de guidage de la lumière (1), ladite plaque comprenant :
une pluralité de feuilles de verre (10) ayant un indice de réfraction nd de 1,56 ou plus, et ayant une épaisseur de 1,0 mm ou moins,
un élément d'entrée (13) qui est agencé au niveau d'une position de 30 mm ou moins par rapport à une surface d'extrémité (12) de chacune des feuilles de verre (10) et qui configuré pour permettre à un signal d'image d'entrer dans les feuilles de verre (10) ; et
une partie (14) formant un miroir réfléchissant ou des parties (14) formant des miroirs réfléchissants, ladite ou lesdites partie(s) étant formée(s) à l'intérieur de l'élément d'entrée (13).

2. Plaque stratifiée de guidage de la lumière (1) selon la revendication 1, plaque dans laquelle une surface d'extrémité (12) de chaque feuille de verre (10) a une rugosité de surface arithmétique Ra de 1 µm ou moins.

3. Plaque stratifiée de guidage de la lumière (1) selon la revendication 1 ou 2, plaque dans laquelle un angle d'intersection formé par chacune des deux surfaces de chaque feuille de verre (10) et formé par une surface d'extrémité (12) de chaque feuille de verre (10) se situe dans les limites d'une plage de 90° ± 3°.

4. Plaque stratifiée de guidage de la lumière (1) selon l'une quelconque des revendications 1 à 3, plaque dans laquelle chaque feuille de verre (10) a une transmittance interne de 80 % ou plus, suivant une longueur de trajet optique de 10 mm et une longueur d'onde de 550 nm.

5. Plaque stratifiée de guidage de la lumière (1) selon l'une quelconque des revendications 1 à 4, plaque dans laquelle chaque feuille de verre (10) a une composition de verre qui, en termes de % en masse, contient de 10 % à 60 % de SiO₂, de 0 % à 8 % de Al₂O₃, de 10 % à 40 % de BaO et de 3 % à 30 % de TiO₂ + La₂O₃, et qui a une viscosité du liquidus de 10^{4,0} dPa·s ou plus.

6. Plaque stratifiée de guidage de la lumière (1) selon l'une quelconque des revendications 1 à 5, plaque dans laquelle chaque feuille de verre (10) a une teneur en Fe₂O₃ de 0,05 % en masse ou moins.

7. Plaque stratifiée de guidage de la lumière (1) selon l'une quelconque des revendications 1 à 6, plaque dans laquelle chaque feuille de verre (10) a une teneur en Cr₂O₃ de 0,0005 % en masse ou moins.

8. Plaque stratifiée de guidage de la lumière (1) selon l'une quelconque des revendications 1 à 7, plaque dans laquelle chaque feuille de verre (10) a une ondulation de 0,1 µm ou moins.

9. Plaque stratifiée de guidage de la lumière (1) selon l'une quelconque des revendications 1 à 8, plaque dans laquelle au moins une surface de chaque feuille de verre (10) a une rugosité de surface arithmétique Ra de moins de 0,5 nm.

10. Plaque stratifiée de guidage de la lumière (1) selon l'une quelconque des revendications 1 à 9, plaque dans laquelle au moins une surface de chaque feuille de verre (10) a une dureté au crayon de 3H ou plus.

11. Plaque stratifiée de guidage de la lumière (1) selon l'une quelconque des revendications 1 à 10, plaque dans laquelle chaque feuille de verre (10) a une surface incurvée, et la surface incurvée a un rayon de courbure de 200 mm ou plus.

12. Plaque stratifiée de guidage de la lumière (1) selon l'une quelconque des revendications 1 à 11, ladite plaque comprenant en outre des parties (11) formant des demi-miroirs à l'intérieur de chacune des feuilles de verre (10).

13. Utilisation de la plaque stratifiée de guidage de la lumière (1) selon l'une quelconque des revendications 1 à 12, ladite plaque étant utilisée comme un élément pour un visiocasque.
